# EUROPÄISCHE PATENTANMELDUNG

(11) **EP 4 850 514 A1**
(43) Veröffentlichungstag der Anmeldung: **09.12.2026**
(21) Anmeldenummer: 26182175.5
(22) Anmeldetag: 01.06.2026
(51) Int. Cl.: A01B 79/00

(54) **VERFAHREN ZUR SCHWADBILDUNG BEI DER ERNTE**

(30) Priorität: 02.06.2025 DE 102025121449
(71) Anmelder: Pöttinger Landtechnik GmbH, 4710 Grieskirchen (AT)
(72) Erfinder: EICHLSEDER, Matthias, 4710 Grieskirchen (AT); HOELLER, Matthias, 4710 Grieskirchen (AT); PUCKMAYR, Daniel, 4710 Grieskirchen (AT); SILBER, Jakob, 4710 Grieskirchen (AT)
(74) Vertreter: Cornet, Simon

(57) **Zusammenfassung**

Die Erfindung betrifft ein Verfahren zur Schwadbildung bei der Ernte. Das Verfahren umfasst das Bilden einer ersten Schwad (5) aus Biomasse mittels eines landwirtschaftlichen Arbeitsgerätes (1) und das Erfassen von Positionsinformationen der ersten Schwad (5) mittels eines Erfassungsmittels. Diese Informationen werden in einer Recheneinheit (3) verarbeitet, wobei die erste Schwad (5) als Einfachumlagebereich (7) referenziert wird. Anschließend wird eine zweite Schwad (6) gebildet, wobei Teile der Biomasse der ersten Schwad (5) in die zweite Schwad (6) integriert werden. Die Positionsinformationen der zweiten Schwad (6) werden ebenfalls erfasst und verarbeitet. Die Recheneinheit (3) berechnet und speichert die Positionsinformationen der zweiten Schwad (6) und deren Lage auf einem Feld (12), wobei Doppelumlagebereiche (8) der zweiten Schwad (6) eindeutig zugeordnet und abgespeichert werden, wenn Teile der ersten Schwad (5) integriert sind.

## Beschreibung

Die Erfindung betrifft ein Verfahren zur Schwadbildung bei der Ernte, sowie ein landwirtschaftliches Arbeitsgerät.

Aus der EP4042849A1 ist ein Verfahren zur Schwadbildung bei der Ernte bekannt.

Das Verfahren der EP4042849A1 weist den Nachteil auf, dass die Informationen zur Schwad nur ungenügend sind.

Aufgabe der vorliegenden Erfindung war es, die Nachteile des Standes der Technik zu überwinden und ein Verfahren und eine Vorrichtung zur Verfügung zu stellen, mittels derer der Informationsgewinn zur Schwad verbessert wird.

Diese Aufgabe wird durch eine Vorrichtung und ein Verfahren gemäß den Ansprüchen gelöst.

Erfindungsgemäß ist ein Verfahren zur Schwadbildung bei der Ernte vorgesehen. Das Verfahren umfasst die folgenden Schritte: Bilden einer ersten Schwad aus Biomasse mittels eines landwirtschaftlichen Arbeitsgerätes; Erfassen von Positionsinformationen der ersten Schwad mittels eines Erfassungsmittels und Verarbeiten der Positionsinformationen der ersten Schwad in einer Recheneinheit, wobei die erste Schwad als Einfachumlagebereich referenziert wird; Bilden einer zweiten Schwad mittels des landwirtschaftlichen Arbeitsgerätes, wobei zumindest Teile der Biomasse der ersten Schwad aus ihrer Position entfernt werden und in die zweite Schwad integriert werden; Erfassen von Positionsinformationen der zweiten Schwad mittels des Erfassungsmittels und Verarbeiten der Positionsinformationen der zweiten Schwad in einer Recheneinheit; Berechnen und Speichern von Positionsinformationen der zweiten Schwad und deren Lage auf einem Feld mittels der Recheneinheit, wobei in den Positionsinformationen eindeutig zugeordnet und abgespeichert wird, wenn in Doppelumlagebereichen der zweiten Schwad auch Teile der ersten Schwad integriert sind.

Das erfindungsgemäße Verfahren bringt den Vorteil mit sich, dass durch die Erfassung und Verarbeitung der Positionsinformationen der Schwaden eine genaue Dokumentation und Analyse der Biomasseverteilung ermöglicht wird. Dies ermöglicht eine optimierte Nutzung der Biomasse und eine effizientere landwirtschaftliche Arbeit. Insbesondere kann die Integration von Teilen der ersten Schwad in die zweite Schwad präzise nachverfolgt und analysiert werden, was zu einer besseren Planung und Durchführung der landwirtschaftlichen Arbeiten führt. Besonders bei Doppelumlagebereichen kann es zu einer Verzopfung der Biomasse kommen, was bei der Weiterverarbeitung der Schwad berücksichtigt werden kann.

Als Einfachumlage im Sinne dieses Dokumentes wird bezeichnet, wenn Biomasse bei der Ernte erstmals zu einer Schwad geformt wird. Insbesondere kann vorgesehen sein, dass die erste Schwad immer zur Gänze aus Einfachumlagebereichen besteht.

Als Doppelumlage im Sinne dieses Dokumentes wird bezeichnet, wenn Biomasse bei der Ernte von einer bereits bestehenden Schwad entnommen und in eine neue Schwad geformt wird. Insbesondere kann vorgesehen sein, dass die zweite Schwad zumindest Doppelumlagebereiche umfasst. Teile der zweiten Schwad können auch Einfachumlagebereiche umfassen. In einer weiteren Ausführungsvariante kann auch vorgesehen sein, dass die zweite Schwad zur Gänze aus Doppelumlagebereichen besteht.

Weiters ist es auch denkbar, dass eine bereits doppelt umgelegte Schwad entnommen und in eine neue Schwad geformt wird. Dies kann als Dreifachumlage bezeichnet werden und erfolgt mutatis mutandis zu den Prinzipien der Doppelumlage. Auch eine Vierfachumlage oder Fünffachumlage ist diesem Prinzip folgend möglich. Dies kann allgemein als Mehrfachumlage bezeichnet werden.

Weiters kann vorgesehen sein, dass die zweite Schwad und, wenn noch vorhanden, die erste Schwad mittels eines Anzeigemittels georeferenziert in einer Karte dargestellt wird, wobei die Doppelumlagebereiche unterschiedlich zu den Einfachumlagebereichen dargestellt werden. Dies bringt den Vorteil mit sich, dass durch die unterschiedliche Darstellung der Doppelumlagebereiche und Einfachumlagebereiche eine visuelle Unterscheidung und bessere Planung ermöglicht wird. Insbesondere kann so schnell und einfach erkannt werden, welche Bereiche bereits umgelagert wurden und welche nicht. Ein Maschinenbediener kann somit beispielsweise durch Anpassung der Fahrgeschwindigkeit beim Aufnehmen der Schwad auf einen Ladewagen auf die dargestellte Information reagieren.

In einer ersten Ausführungsvariante kann vorgesehen sein, dass das Anzeigemittel ein Display ist, welches am Zugfahrzeug angeordnet ist. Dies kann beispielsweise ein gerätespezifisches Display des Zugfahrzeugs oder der landwirtschaftlichen Arbeitsmaschine sein. Das Display kann beispielsweise auch ein ISOBUS-Display bzw. ein ISOBUS-Terminal sein. Das Display kann beispielsweise auch ein herkömmliches Smartphone oder Tablet sein, welches mit dem Zugfahrzeug oder auch direkt mit dem landwirtschaftlichen Arbeitsgerät gekoppelt ist bzw. koppelbar ist. Insbesondere kann vorgesehen sein, dass das Smartphone oder Tablet in einer Halterung im Zugfahrzeug angeordnet ist und entweder kabelgebunden oder auch Kabellos, wie etwa per WLAN oder per Bluetooth mit dem Zugfahrzeug oder auch direkt mit dem landwirtschaftlichen Arbeitsgerät gekoppelt ist.

In einer weiteren Ausführungsvariante kann auch vorgesehen sein, dass das Anzeigemittel eine Augmented Reality Brille ist. Dies bringt den Vorteil mit sich, dass die Informationen zur Schwad direkt zur jeweiligen Schwad angezeigt werden kann. Dadurch kann eine erleichterte Orientierung und Arbeit für den Maschinenbediener erreicht werden, was die Effizienz und Präzision der landwirtschaftlichen Arbeiten erhöht.

Ferner kann vorgesehen sein, dass die Doppelumlagebereiche in einer unterschiedlichen Farbgebung und/oder einer unterschiedlichen Formgebung zu den Einfachumlagebereichen dargestellt werden. Dies bringt den Vorteil mit sich, dass durch die unterschiedliche Farbgebung und/oder Formgebung eine intuitivere und schnellere Erkennung der verschiedenen Umlagebereiche ermöglicht wird. Eine unterschiedliche Formgebung kann beispielsweise eine unterschiedliche Strichstärke oder eine unterschiedliche Strichtype bei der Darstellung sein.

Darüber hinaus kann vorgesehen sein, dass bei der Schwadbildung die spezifische Menge an Biomasse pro Laufmeter in der Schwad erfasst und zu den Positionsinformationen der ersten Schwad und/oder der zweiten Schwad in der Recheneinheit abgespeichert werden. Dies bringt den Vorteil mit sich, dass durch die Erfassung und Speicherung der spezifischen Menge an Biomasse eine präzisere Dokumentation und Analyse der Biomasseverteilung ermöglicht wird. Dies ermöglicht eine optimierte Nutzung der Biomasse und eine effizientere landwirtschaftliche Arbeit.

Weiters kann es zweckmäßig sein, wenn die spezifische Menge pro Laufmeter an Biomasse in der Schwad mittels des landwirtschaftlichen Arbeitsgerätes erfasst wird. Dies bringt den Vorteil mit sich, dass die spezifische Menge pro Laufmeter an Biomasse durch diese Maßnahme einfach erfasst werden kann.

Ferner kann vorgesehen sein, dass die spezifische Menge an Biomasse pro Laufmeter in der Schwad mittels der Leistungsaufnahme des landwirtschaftlichen Arbeitsgerätes bestimmt wird, wobei für die verwendete Type des landwirtschaftlichen Arbeitsgerätes eine Korrespondenz zwischen spezifischer Menge an Biomasse pro Laufmeter, Verfahrgeschwindigkeit und Leistungsaufnahme des landwirtschaftlichen Arbeitsgerätes abgespeichert ist. Dies bringt den Vorteil mit sich, dass durch die Bestimmung der spezifischen Menge an Biomasse mittels der Leistungsaufnahme des landwirtschaftlichen Arbeitsgerätes eine präzisere Dokumentation und Analyse der Biomasseverteilung ermöglicht wird.

Darüber hinaus kann vorgesehen sein, dass mittels eines Erfassungsmittels die Futterdichte erfasst wird und nach Arbeitsbreite des landwirtschaftlichen Arbeitsgerätes und Schwadbreite die spezifische Menge an Biomasse pro Laufmeter in der Schwad bestimmt wird. Somit kann beispielsweise mittels einer Drohne die Futterdichte erfasst werden und über die Arbeitsbreite des landwirtschaftlichen Arbeitsgerätes und Schwadbreite die spezifische Menge an Biomasse pro Laufmeter in der Schwad berechnet werden.

Weiters kann es zweckmäßig sein, wenn die Positionsinformationen der Schwaden und die Informationen zu Doppelumlagebereichen und Einfachumlagebereichen von einer Recheneinheit eines Folgegerätes eingelesen werden und für die Steuerung des Folgegerätes herangezogen werden, insbesondere dass die Positionsinformationen der Schwaden und die Informationen zu Doppelumlagebereichen und Einfachumlagebereichen automatisiert in die Steuerung des Folgegerätes eingreift. Dies bringt den Vorteil mit sich, dass durch das Einlesen und Heranziehen der Positionsinformationen und Informationen zu den Umlagebereichen eine optimierte Steuerung des Folgegerätes ermöglicht wird. Insbesondere kann so eine effizientere und präzisere landwirtschaftliche Arbeit erreicht werden. Ein Folgegerät kann somit beispielsweise durch Anpassung der Fahrgeschwindigkeit beim Aufnehmen der Schwad auf einen Ladewagen auf die bereitgestellte Information reagieren. Beispielsweise können bei einem Ladewagen auch Messer ausgeschwenkt werden, wenn ein Doppelumlagebereich durchfahren wird.

Ferner kann vorgesehen sein, dass im Folgegerät ein Silierzusatzstoff beigemengt wird, wobei die Menge an Silierzusatzstoff von den Positionsinformationen der Schwaden und die Informationen zu Doppelumlagebereichen und Einfachumlagebereichen abhängt. Dies bringt den Vorteil mit sich, dass durch die Beimengung des Silierzusatzstoffes in Abhängigkeit der Positionsinformationen und Informationen zu den Umlagebereichen eine optimierte Silierung ermöglicht wird. Insbesondere kann so die Qualität der Silierung verbessert und die landwirtschaftliche Arbeit effizienter gestaltet werden.

Weiters kann es zweckmäßig sein, wenn die Positionsinformationen der Schwaden eine geographische Lage von ersten Punkten entlang einer ersten Schwadseite und einer Lage von zweiten Punkten entlang einer zweiten Schwadseite enthalten. Dies bringt den Vorteil mit sich, dass durch die Erfassung und Verarbeitung der geographischen Lage der Punkte eine präzisere Dokumentation und Analyse der Schwaden ermöglicht wird. Dies ermöglicht eine optimierte Nutzung der Biomasse und eine effizientere landwirtschaftliche Arbeit.

Ferner kann vorgesehen sein, dass die geographische Lage von Punkten enthaltend die Positionsinformationen der Schwaden direkt in der Recheneinheit abgespeichert werden oder dass die geographische Lage von Punkten enthaltend die Positionsinformationen der Schwaden dadurch gespeichert werden, dass für einzelne Punkte entlang der Schwade eine Positionsinformation der Schwadmitte und eine zum jeweiligen Punkt zugehörige Schwadbreite gespeichert wird. Dies bringt den Vorteil mit sich, dass durch die Speicherung der geographischen Lage der Punkte eine präzisere Dokumentation und Analyse der Schwaden ermöglicht wird. Dies ermöglicht eine optimierte Nutzung der Biomasse und eine effizientere landwirtschaftliche Arbeit.

Darüber hinaus kann vorgesehen sein, dass von der Recheneinheit ein optimierter Ablauf zum Bilden der ersten Schwad und zum Bilden der zweiten Schwad berechnet wird, wobei die vorliegenden Eigenschaften und/oder Verteilung der Biomasse auf dem Feld zur Berechnung des optimierten Ablaufes berücksichtigt wird, wobei der optimierte Ablauf zum Bilden der ersten Schwad und zum Bilden der zweiten Schwad in einem Anzeigemittel angezeigt und/oder zur Steuerung des landwirtschaftlichen Arbeitsgerätes herangezogen wird. Dies bringt den Vorteil mit sich, dass durch die Berechnung und Anzeige des optimierten Ablaufes eine effizientere und präzisere landwirtschaftliche Arbeit ermöglicht wird. Insbesondere kann so die Nutzung der Biomasse optimiert und die landwirtschaftliche Arbeit effizienter gestaltet werden.

Weiters kann vorgehen sein, dass am landwirtschaftlichen Arbeitsgerät oder am Zugfahrzeug Sensoren angeordnet sind, welche zur Erfassung von Umgebungsparametern wie etwa Temperatur, Feuchtigkeit oder Bodenbeschaffenheit dienen. Dies bringt den Vorteil mit sich, dass dadurch zusätzliche relevante Daten bereitgestellt werden können, die zur Optimierung der Schwadbildung und zur Verbesserung der Biomasseverteilung beitragen.

Erfindungsgemäß ist außerdem ein landwirtschaftliches Arbeitsgerät zur Schwadbildung umfassend eine Recheneinheit vorgesehen. Die Recheneinheit umfasst Befehle, welche das landwirtschaftliche Arbeitsgerät veranlassen, die Schritte des Verfahrens gemäß einem der vorhergehenden Ansprüche auszuführen. Das erfindungsgemäße landwirtschaftliche Arbeitsgerät bringt den Vorteil mit sich, dass durch die Ausführung der Schritte des Verfahrens eine effizientere und präzisere landwirtschaftliche Arbeit ermöglicht wird. Insbesondere kann so die Nutzung der Biomasse optimiert und die landwirtschaftliche Arbeit effizienter gestaltet werden.

Insbesondere kann vorgesehen sein, dass das landwirtschaftliche Arbeitsgerät mit einem Zugfahrzeug gekoppelt ist und von diesem gezogen wird. Das landwirtschaftliche Arbeitsgerät kann ein Mittel zur Bildung der Schwad aufweisen. Insbesondere kann vorgesehen sein, dass das landwirtschaftliche Arbeitsgerät einen vorderen Rechkreisel und einen hinteren Rechkreisel aufweist. Der vordere Rechkreisel kann zum Bilden einer ersten Schwad ausgebildet sein. Der hintere Rechkreisel kann zum Bilden einer zweiten Schwad ausgebildet sein.

Weiters kann vorgesehen sein, dass das landwirtschaftliche Arbeitsgerät und oder das Zugfahrzeug mit einer Recheneinheit gekoppelt ist. Die Recheneinheit kann zum Steuern des Arbeitsablaufes des landwirtschaftlichen Arbeitsgerätes dienen.

Weiters kann vorgesehen sein, dass am Zugfahrzeug oder am landwirtschaftlichen Arbeitsgerät ein GPS-Empfänger angeordnet ist. Der GPS-Empfänger kann mit der Recheneinheit gekoppelt sein und zur Positionsbestimmung des Zugfahrzeuges oder des landwirtschaftlichen Arbeitsgerätes dienen. Über die Geometrie des Zugfahrzeuges und des landwirtschaftlichen Arbeitsgerätes kann aus der Positionsbestimmung des Zugfahrzeuges eine Position der Schwad berechnet werden.

Das landwirtschaftliche Arbeitsgerät kann ein Kreiselschwader sein. Das landwirtschaftliche Arbeitsgerät kann auch ein Merger sein. Das landwirtschaftliche Arbeitsgerät kann auch ein Mähwerk mit integriertem Aggregat, wie etwa Band, zur Schwadbildung sein. Das landwirtschaftliche Arbeitsgerät kann auch ein sonstiges Gerät sein, welches zur Schwadbildung eingesetzt werden kann.

Insbesondere kann vorgesehen sein, dass die Schwaden je nach Art des verwendeten landwirtschaftlichen Arbeitsgerätes am Anzeigemittel unterschiedlich dargestellt werden. Dies kann beispielsweise durch unterschiedliche Farbgebung, durch unterschiedliche Schraffur, durch unterschiedliche Schattierung, durch unterschiedliche Strichstärke, durch Textmarkierung oder sonstige Darstellungsmerkmale sein.

Insbesondere kann vorgesehen sein, dass das landwirtschaftliche Arbeitsgerät als Vierkreiselschwader ausgebildet ist, welcher zwei vordere Rechkreisel und zwei hintere Rechkreisel aufweist.

Erfindungsgemäß ist außerdem ein Computerprogrammprodukt vorgesehen, das Befehle umfasst, die bewirken, dass das landwirtschaftliche Arbeitsgerät des vorhergehenden Anspruchs die Verfahrensschritte nach einem der vorhergehenden Ansprüche ausführt. Das erfindungsgemäße Computerprogrammprodukt bringt den Vorteil mit sich, dass durch die Ausführung der Verfahrensschritte eine effizientere und präzisere landwirtschaftliche Arbeit ermöglicht wird. Insbesondere kann so die Nutzung der Biomasse optimiert und die landwirtschaftliche Arbeit effizienter gestaltet werden.

Schließlich ist erfindungsgemäß ein computerlesbarer Datenträger vorgesehen, auf dem das Computerprogrammprodukt nach dem vorhergehenden Anspruch gespeichert ist. Der erfindungsgemäße computerlesbare Datenträger bringt den Vorteil mit sich, dass durch das Speichern des Computerprogrammproduktes eine effizientere und präzisere landwirtschaftliche Arbeit ermöglicht wird. Insbesondere kann so die Nutzung der Biomasse optimiert und die landwirtschaftliche Arbeit effizienter gestaltet werden.

Zum besseren Verständnis der Erfindung wird diese anhand der nachfolgenden Figuren näher erläutert.

Es zeigen jeweils in stark vereinfachter, schematischer Darstellung:
- Fig. 1: Eine schematische Darstellung eines ersten Ausführungsbeispiels eines landwirtschaftlichen Arbeitsgerätes auf einem Feld in einer Draufsicht;
- Fig. 2: Eine Draufsicht auf eine Schwad, welche durch eine Schwadmitte und eine Schwdbreite referenziert ist;
- Fig. 3: Eine Draufsicht auf eine Schwad, welche durch erste Punkte und zweite Punkte referenziert ist;
- Fig. 4: Eine schematische Darstellung eines zweiten Ausführungsbeispiels eines landwirtschaftlichen Arbeitsgerätes mit einer ersten Schwad und einer zweiten Schwad in einer Draufsicht;
- Fig. 5: Eine schematische Darstellung eines Feldes mit Einfachumlagebereichen und Doppelumlagebereichen in einer Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

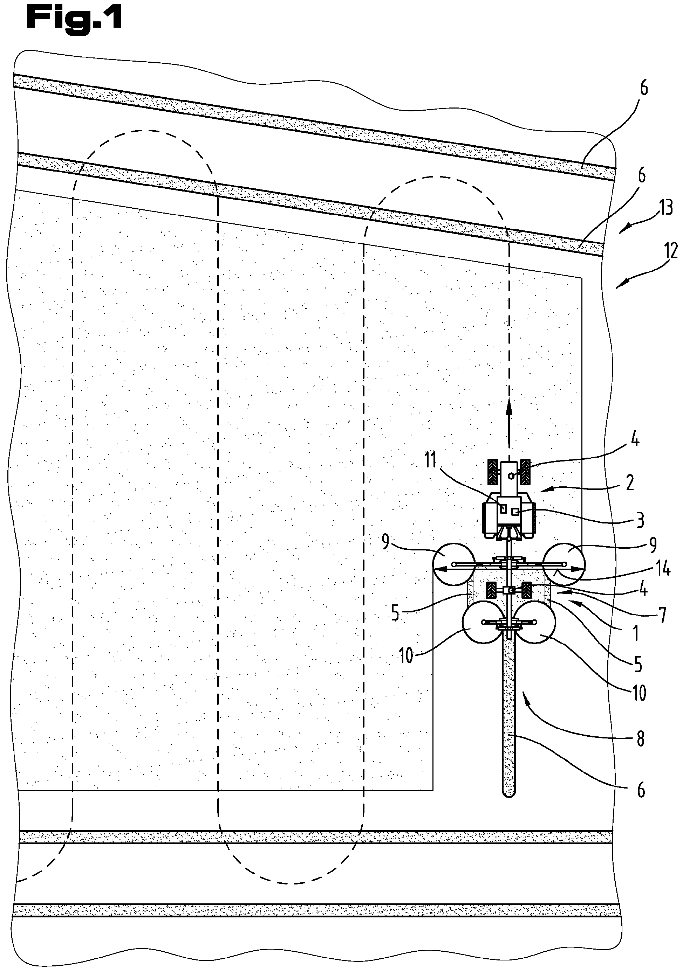

Fig. 1 zeigt ein erstes Ausführungsbeispiel eines landwirtschaftlichen Arbeitsgerätes 1. Das landwirtschaftliche Arbeitsgerät 1 ist in diesem Ausführungsbeispiel mit einem Zugfahrzeug 2 gekoppelt. Insbesondere kann vorgesehen sein, dass das landwirtschaftliche Arbeitsgerät 1 in Form eines Kreiselschwaders ausgebildet ist. Im vorliegenden Ausführungsbeispiel ist das landwirtschaftliche Arbeitsgerät 1 in Form eines Vierkreiseschwaders ausgebildet.

Weiters kann vorgesehen sein, dass eine Recheneinheit 3 ausgebildet ist, welche zum Steuern der Funktionen des landwirtschaftlichen Arbeitsgerätes 1 ausgebildet ist. Weiters kann vorgesehen sein, dass ein GPS-Empfänger 4 ausgebildet ist, welcher zum Erfassen der Position des landwirtschaftlichen Arbeitsgerätes 1 oder des Zugfahrzeuges 2 dient. Im vorliegenden Ausführungsbeispiel kann vorgesehen sein, dass sowohl am Zugfahrzeug 2 als auch am landwirtschaftlichen Arbeitsgerät 1 ein GPS-Empfänger 4 angeordnet ist. Mittels des GPS-Empfängers 4 und unter Kenntnis der Geometrie des Zugfahrzeuges 2 bzw. des landwirtschaftlichen Arbeitsgerätes 1 kann die Position einer ersten Schwad 5 bzw. einer zweiten Schwad 6, welche mittels dem landwirtschaftlichen Arbeitsgerät 1 erzeugt wird, erfasst werden.

Insbesondere kann vorgesehen sein, dass die erste Schwad 5 einen Einfachumlagebereich 7 bildet. In diesem Einfachumlagebereich 7 wird die Biomasse vom frei verteilten Zustand zur ersten Schwad 5 geformt. Weiters kann vorgesehen sein, dass die zweite Schwad 6 einen Doppelumlagebereich 8 bildet. Im Doppelumlagebereich 8 ist die erste Schwad 5 integriert. Der Doppelumlagebereich 8 kennzeichnet sich somit dadurch, dass eine bereits geformte Schwad aus ihrer Ablageposition entfernt wird und nochmals umgelegt wird. Insbesondere kann vorgesehen sein, dass im Doppelumlagebereich 8 zusätzlich zur ersten Schwad 5 weitere Biomasse, welche noch nicht zu einer Schwad geformt wurde, vorhanden ist.

Derartige Doppelumlagen können für ein Folgegerät einen erhöhten Leistungsbedarf bedeuten. Weiters kann es bei derartigen Doppelumlagen zu einer Verzapfung der Biomasse kommen, wodurch eine unterschiedliche Vorgehensweise bei der Weiterverarbeitung von Doppelumlagebereichen 8 zu Einfachumlagebereichen 7 erforderlich ist. Beispielsweise kann es erforderlich sein, dass bei Doppelumlagebereichen die Fahrgeschwindigkeit eines Folgefahrzeuges, wie etwa eines Ladewagens reduziert wird. Weiters kann es auch notwendig sein, dass bei Doppelumlagen beispielsweise Messer eines Ladewagens oder einer Ballenpresse ausgeklappt werden.

Weiters ist es auch denkbar, dass das landwirtschaftliche Arbeitsgerät 1 einen vorderen Rechkreisel 9 und einen hinteren Rechkreisel 10 umfasst. Im vorliegenden Ausführungsbeispiel nach Fig. 1 sind zwei vordere Rechkreisel 9 und zwei hintere Rechkreisel 10 ausgebildet. Insbesondere kann vorgesehen sein, dass mittels des vorderen Rechkreisels 9 die erste Schwad 5, insbesondere ein Einfachumlagebereich 7 gebildet wird. Weiters kann vorgesehen sein, dass mittels des hinteren Rechkreisels 10 eine zweite Schwad 6 gebildet wird, wobei in einem Doppelumlagebereich 8 die erste Schwad 5 vollständig integriert wird.

Wie in Fig. 1 schematisch angedeutet, kann ein Anzeigemittel 11 ausgebildet sein, welches zur Visualisierung der Einfachumlagebereiche 7 bzw. der Doppelumlagebereiche 8 dient. Insbesondere kann vorgesehen sein, dass das Anzeigemittel 11 am Zugfahrzeug 2 angeordnet ist. Hierbei kann das Display des Zugfahrzeuges 2 als Anzeigemittel dienen.

Im vorliegenden Ausführungsbeispiel bei der Verwendung eines landwirtschaftlichen Arbeitsgerätes 1 mit einem vorderen Rechkreisel 9 und einem hinteren Rechkreisel 10, welche sich überdecken, wird schon in einem Arbeitsdurchgang ein Doppelumlagebereich 8 erzeugt. Wenn das landwirtschaftliche Arbeitsgerät 1 allerdings nur die erste Schwad 5 bildet, wie dies beispielsweise bei einem Einfachschwader, einem Doppelschwader oder einem Merger der Fall ist, so kann ein Doppelumlagebereich 8 zustande kommen, wenn ein Feld 12 bei der erneuten Bearbeitung so überfahren wird, dass die bereits erzeugte erste Schwad 5 erneut umgelegt wird.

In Fig. 1 ist schematisch dargestellt, wie das landwirtschaftliche Arbeitsgerät 1 auf dem Feld 12 bewegt wird. Insbesondere kann vorgesehen sein, dass im Bereich eines Vorgewendes 13 vermehrt Doppelumlagebereiche 8 vorkommen. Dies kann auch dann der Fall sein, wenn ein Einkreiselschwader oder ein Doppelschwader verwendet wird.

Insbesondere kann vorgesehen sein, dass das landwirtschaftliche Arbeitsgerät 1 eine Arbeitsbreite 14 aufweist. Von der Arbeitsbreite 14 ist abhängig wie viel Biomasse mittels des landwirtschaftlichen Arbeitsgerät zu einer oder mehreren Schwaden geformt werden kann.

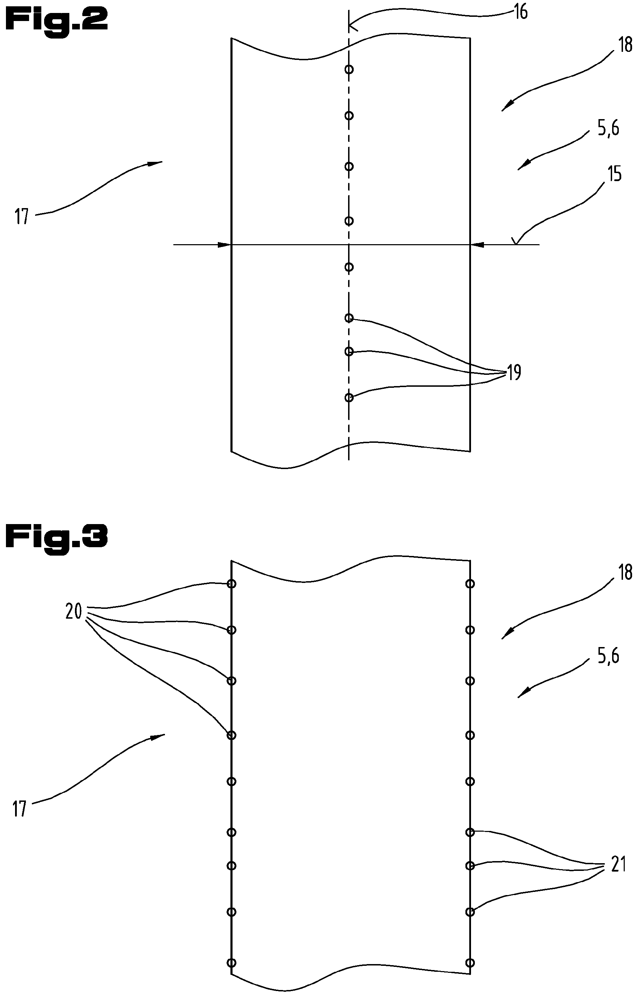

Fig. 2 zeigt eine Draufsicht auf einen Teilbereich einer Schwad 5, 6. Wie aus Fig. 2 ersichtlich, weist die Schwad 5, 6 eine Schwadbreite 15 auf. Insbesondere kann vorgesehen sein, dass die Schwadbreite 15 sich symmetrisch bezüglich einer Schwadmitte 16 erstreckt. Die Schwadbreite 15 kann von einer ersten Schwadseite 17 zu einer zweiten Schwadseite 18 reichen. Insbesondere kann vorgesehen sein, dass unter Zuhilfenahme des GPS-Empfängers 4 die Lage eines Schwadmittelpunktes 19 am Feld 12 erfasst und in der Recheneinheit 3 abgespeichert wird. Der Schwadmittelpunkt 19 kann hierbei auf der Schwadmitte 16 liegen. Insbesondere kann vorgesehen sein, dass in einem periodischen Abstand mehrere Schwadmittelpunkte 19 erfasst werden und somit der Verlauf der Schwad 5, 6 erfasst werden kann. Die einzelnen Schwadmittelpunkte 19 können hierbei zu einem Linienzug miteinander verbunden werden. Weiters ist es auch denkbar, dass zu jedem der Schwadmittelpunkte 19 eine Schwadbreite 15 ermittelt wird bzw. mitgegeben wird, sodass insgesamt der Verlauf der ersten Schwadseite 17 und der zweiten Schwadseite 18 rechnerisch verarbeitet werden kann. Insbesondere kann vorgesehen sein, dass die Koordinaten der Schwadmittelpunkte 19 in einer Tabelle abgespeichert werden.

In der Fig. 3 ist eine weitere und gegebenenfalls für sich eigenständige Ausführungsform Schwad 5, 6 gezeigt, wobei wiederum für gleiche Teile gleiche Bezugszeichen bzw. Bauteilbezeichnungen wie in der vorangegangenen Fig. 2 verwendet werden. Um unnötige Wiederholungen zu vermeiden, wird auf die detaillierte Beschreibung in den vorangegangenen Fig. 2 hingewiesen bzw. Bezug genommen.

In einer alternativen Variante gemäß der Darstellung nach Fig. 3 ist es auch denkbar, dass an der ersten Schwadseite 17 erste Punkte 20 erfasst werden und dass an der zweiten Schwadseite 18 zweite Punkte 21 erfasst werden. Die ersten Punkte 20 und die zweiten Punkte 21 können hierbei die Begrenzung der Schwad 5, 6 darstellen.

Entsprechend der Beschreibung der Fig. 2 und 3 kann die Schwad 5, 6 am Feld 12 georeferenziert werden. Wenn alle Schwaden am Feld 12 referenziert sind, kann diese Information genutzt werden, um Einfachumlagebereiche 7 und Doppelumlagebereiche 8 bzw. Mehrfachumlagebereiche zu erfassen und diese Information auch weiter zu verarbeiten, um auf Basis dieser Information die Futterernte zu verbessern. Insbesondere ist es beispielsweise denkbar, dass mittels des Anzeigemittels 11 Einfachumlagebereiche 7 und Doppelumlagebereiche 8 in einer unterschiedlichen Darstellung am Anzeigemittel 11 dargestellt werden. Diese unterschiedliche Darstellung kann beispielsweise eine unterschiedliche Strichstärke der Einfachumlagebereiche 7 und der Doppelumlagebereiche 8 sein. Die unterschiedliche Darstellung kann auch eine unterschiedliche Farbgebung der Einfachumlagebereiche 7 und der Doppelumlagebereiche 8 sein. Weiters ist es auch denkbar, dass beispielsweise durch unterschiedliche Schraffur, durch unterschiedliche Schattierung, durch unterschiedliche Farbgebung durch Textmarkierung oder sonstige Darstellungsmerkmale eine unterschiedliche Darstellung von Einfachumlagebereichen 7 und Doppelumlagebereichen 8 erfolgt.

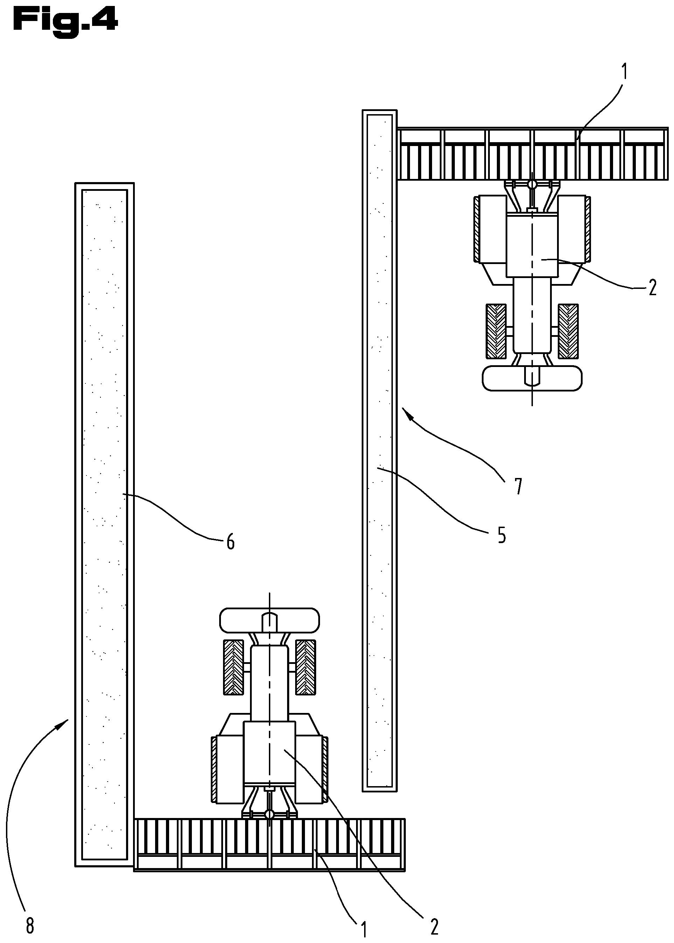

Fig. 4 zeigt eine schematische Darstellung eines zweiten Ausführungsbeispiels des landwirtschaftlichen Arbeitsgerätes 1, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Im Ausführungsbeispiel nach Fig. 4 ist das landwirtschaftliche Arbeitsgerät 1 als Merger ausgebildet. Wie aus Fig. 4 ersichtlich, kann vorgesehen sein, dass in einer ersten Durchfahrt des landwirtschaftlichen Arbeitsgerätes 1 eine erste Schwad 5 gebildet wird, welche einen Einfachumlagebereich 7 aufweist. In einer zweiten Durchfahrt kann eine zweite Schwad 6 gebildet werden, wobei die erste Schwad 5 in die zweite Schwad 6 integriert wird und somit die zweite Schwad 5 zur Gänze einen Doppelumlagebereich 8 aufweist.

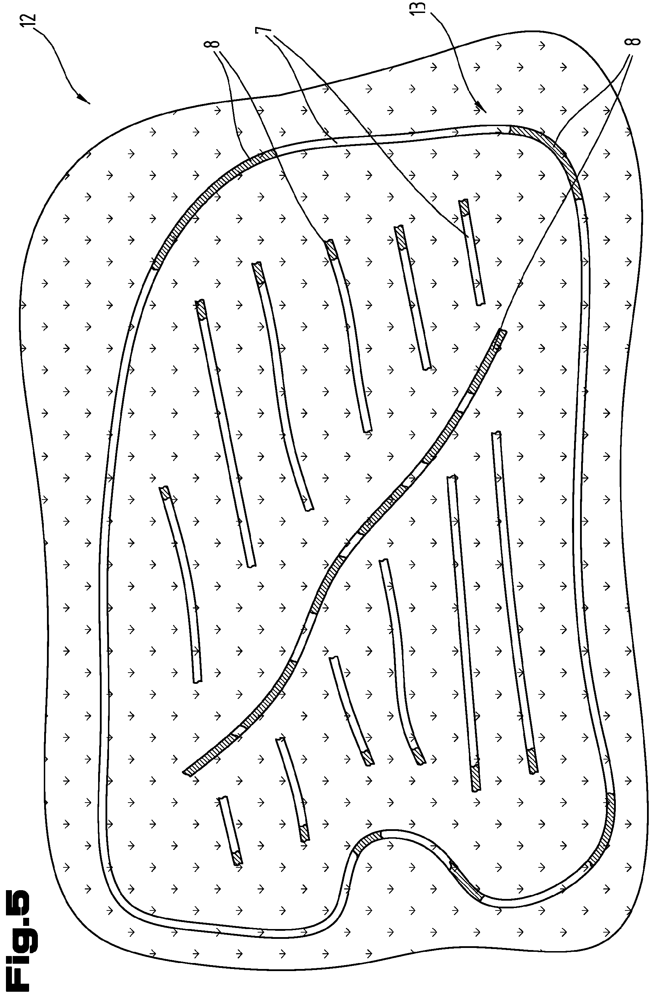

Fig. 5 zeigt eine schematische Darstellung eines Feldes mit Einfachumlagebereichen 7 und Doppelumlagebereichen 8 in einer Draufsicht, wobei wiederum für gleiche Teile gleiche Bezugszeichen bzw. Bauteilbezeichnungen wie in den vorangegangenen Fig. 1 bis 4 verwendet werden.

Um unnötige Wiederholungen zu vermeiden, wird auf die detaillierte Beschreibung in den vorangegangenen Fig. 1 bis 3 hingewiesen bzw. Bezug genommen. Eine derartige schematische Darstellung kann beispielsweise auf dem Anzeigemittel 11 angezeigt werden. Wie aus Fig. 5 ersichtlich, können der Einfachumlagebereich 7 und der Doppelumlagebereich 8 visuell voneinander unterscheidbar angeordnet sein.

Wie aus Fig. 5 ersichtlich, kann besonders am Vorgewende 13 ein gehäuftes Auftreten von Doppelumlagebereichen 8 vorkommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Landwirtschaftliches Arbeitsgerät
- 2: Zugfahrzeug
- 3: Recheneinheit
- 4: GPS-Empfänger
- 5: erste Schwad
- 6: zweite Schwad
- 7: Einfachumlagebereich
- 8: Doppelumlagebereich
- 9: vorderer Rechkreisel
- 10: hinterer Rechkreisel
- 11: Anzeigemittel
- 12: Feld
- 13: Vorgewende
- 14: Arbeitsbreite
- 15: Schwadbreite
- 16: Schwadmitte
- 17: erste Schwadseite
- 18: zweite Schwadseite
- 19: Schwadmittelpunkt
- 20: erste Punkte
- 21: zweite Punkte

## Patentansprüche

1. Verfahren zur Schwadbildung bei der Ernte, das Verfahren umfassend die Schritte:
- Bilden einer ersten Schwad (5) aus Biomasse mittels eines landwirtschaftlichen Arbeitsgerätes (1);
- Erfassen von Positionsinformationen der ersten Schwad (5) mittels eines Erfassungsmittels und verarbeiten der Positionsinformationen der ersten Schwad (5) in einer Recheneinheit (3), wobei die erste Schwad (5) als Einfachumlagebereich (7) referenziert wird;
- Bilden einer zweiten Schwad (6) mittels des landwirtschaftlichen Arbeitsgerätes (1), wobei zumindest Teile der Biomasse der ersten Schwad (5) aus ihrer Position entfernt wird und in die zweite Schwad (6) integriert wird;
- Erfassen von Positionsinformationen der zweiten Schwad (6) mittels des Erfassungsmittels und verarbeiten der Positionsinformationen der zweiten Schwad (6) in einer Recheneinheit (3);
- Berechnen und Speichern von Positionsinformationen der zweiten Schwad (6) und deren Lage auf einem Feld (12) mittels der Recheneinheit (3), wobei in den Positionsinformationen eindeutig zugeordnet und abgespeichert wird, wenn in Doppelumlagebereichen (8) der zweiten Schwad (6) auch Teile der ersten Schwad (5) integriert sind.

2. Verfahren nach Anspruch 1, **dadurch gekennzeichnet, dass** die zweite Schwad (6) und, wenn noch vorhanden, die erste Schwad (5) mittels eines Anzeigemittels (11) georeferenziert in einer Karte dargestellt wird, wobei die Doppelumlagebereiche (8) unterschiedlich zu den Einfachumlagebereichen (7) dargestellt werden.

3. Verfahren nach Anspruch 2, **dadurch gekennzeichnet, dass** die Doppelumlagebereiche (8) in einer unterschiedlichen Farbgebung und/oder einer unterschiedlichen Formgebung zu den Einfachumlagebereichen (7) dargestellt werden.

4. Verfahren nach einem der vorhergehenden Ansprüche, **dadurch gekennzeichnet, dass** bei der Schwadbildung die spezifische Menge an Biomasse pro Laufmeter in der Schwad (5) erfasst und zu den Positionsinformationen der ersten Schwad (5) und/oder der zweiten Schwad (6) in der Recheneinheit (3) abgespeichert werden.

5. Verfahren nach Anspruch 4, **dadurch gekennzeichnet, dass** die spezifische Menge pro Laufmeter an Biomasse in der Schwad (5) mittels des landwirtschaftlichen Arbeitsgerätes (1) erfasst wird.

6. Verfahren nach Anspruch 5, **dadurch gekennzeichnet, dass** die spezifische Menge an Biomasse pro Laufmeter in der Schwad (5) mittels der Leistungsaufnahme des landwirtschaftlichen Arbeitsgerätes (1) bestimmt wird, wobei für die verwendete Type des landwirtschaftlichen Arbeitsgerätes (1) eine Korrespondenz zwischen spezifischer Menge an Biomasse pro Laufmeter, Verfahrgeschwindigkeit und Leistungsaufnahme des landwirtschaftlichen Arbeitsgerätes (1) abgespeichert ist.

7. Verfahren nach Anspruch 5, **dadurch gekennzeichnet, dass** mittels eines Erfassungsmittels die Futterdichte erfasst wird und nach Arbeitsbreite (14) des landwirtschaftlichen Arbeitsgerätes (1) und Schwadbreite (15) die spezifische Menge an Biomasse pro Laufmeter in der Schwad (5) bestimmt wird.

8. Verfahren nach einem der vorhergehenden Ansprüche, **dadurch gekennzeichnet, dass** die Positionsinformationen der Schwaden (5, 6) und die Informationen zu Doppelumlagebereichen (8) und Einfachumlagebereichen (7) von einer Recheneinheit (3) eines Folgegerätes eingelesen werden und für die Steuerung des Folgegeräte herangezogen werden, insbesondere dass die Positionsinformationen der Schwaden (5, 6) und die Informationen zu Doppelumlagebereichen (8) und Einfachumlagebereichen (7) automatisiert in die Steuerung des Folgegerätes eingreift.

9. Verfahren nach Anspruch 8, **dadurch gekennzeichnet, dass** im Folgegerät ein Silierzusatzstoff beigemengt wird, wobei die Menge an Silierzusatzstoff von den Positionsinformationen der Schwaden (5, 6) und die Informationen zu Doppelumlagebereichen (8) und Einfachumlagebereichen (7) abhängt.

10. Verfahren nach einem der vorhergehenden Ansprüche, **dadurch gekennzeichnet, dass** die Positionsinformationen der Schwaden (5, 6) eine geographische Lage von ersten Punkten (20) entlang einer ersten Schwadseite (17) und einer Lage von zweiten Punkten (21) entlang einer zweite Schwadseite (18) enthalten.

11. Verfahren nach Anspruch 9, **dadurch gekennzeichnet, dass** die geographische Lage von Punkten (20, 21) enthaltend die Positionsinformationen der Schwaden (5, 6) direkt in der Recheneinheit (3) abgespeichert werden oder dass die geographische Lage von Punkten (20, 21) enthaltend die Positionsinformationen der Schwaden (5, 6) dadurch gespeichert werden, dass für einzelne Punkte (20, 21) entlang der Schwade (5, 6) eine Positionsinformation von Schwadmittelpunkten (19) der Schwadmitte (16) und eine zum jeweiligen Punkt (20, 21) zugehörige Schwadbreite (15) gespeichert wird.

12. Verfahren nach einem der vorhergehenden Ansprüche, **dadurch gekennzeichnet, dass** von der Recheneinheit (3) ein optimierter Ablauf zum Bilden der ersten Schwad (5) und zum Bilden der zweiten Schwad (6) berechnet wird, wobei die vorliegenden Eigenschaften und/oder Verteilung der Biomasse auf dem Feld (12) zur Berechnung des optimierten Ablaufes berücksichtigt wird, wobei der optimierte Ablauf zum Bilden der ersten Schwad (5) und zum Bilden der zweiten Schwad (6) in einem Anzeigemittel (11) angezeigt und/oder zur Steuerung des landwirtschaftlichen Arbeitsgerätes (1) herangezogen wird.

13. Landwirtschaftliches Arbeitsgerät (1) zur Schwadbildung umfassend eine Recheneinheit, wobei die Recheneinheit (3) Befehle umfasst, welche das landwirtschaftliche Arbeitsgerät (1) veranlasst die Schritte des Verfahrens gemäß einem der Ansprüche 1 bis 12 auszuführen.

14. Computerprogrammprodukt, umfassend Befehle, die bewirken, dass das landwirtschaftliche Arbeitsgerät (1) des Anspruchs 13 die Verfahrensschritte nach einem der Ansprüche 1 bis 12 ausführt.

15. Computerlesbarer Datenträger, auf dem das Computerprogrammprodukt nach Anspruch 14 gespeichert ist.
